# EUROPEAN PATENT APPLICATION

(11) **EP 4 793 804 A1**
(43) Date of publication of application: **19.08.2026**
(21) Application number: 24880983.2
(22) Date of filing: 09.05.2024
(51) Int. Cl.: G06F 21/57

(54) **VULNERABILITY REMEDIATION CODE DETECTION METHOD AND RELATED DEVICE**

(30) Priority: 26.10.2023 CN 202311402518; 30.01.2024 CN 202410135488
(71) Applicant: Huawei Cloud Computing Technologies Co., Ltd., Gui'an New District, Guizhou 550025 (CN)
(72) Inventor: ZHU, Yi, Guiyang, Guizhou 550025 (CN); WANG, Dingchun, Guiyang, Guizhou 550025 (CN); LI, Xingxing, Guiyang, Guizhou 550025 (CN); HUANG, Haixing, Guiyang, Guizhou 550025 (CN)
(74) Representative: Körber, Martin Hans
(86) International application number: PCT/CN2024/091974
(87) International publication number: WO 2025/086604

(57) **Abstract**

This application provides a vulnerability fixing code identification method, including: obtaining commit information of open-source software, where the commit information includes a code snippet in a commit and text information associated with the code snippet; inputting the commit information into a first language model for identification, to obtain function change information and test case information; inputting the function change information into a vulnerability fixing identification model to obtain a vulnerability fixing code snippet for a target vulnerability, and inputting the test case information into a vulnerability test case identification model to obtain a test case code snippet for the target vulnerability; and then inputting the vulnerability fixing code snippet for the target vulnerability and the test case code snippet for the target vulnerability into a second language model for integration and identification, to obtain an identification result. Based on a significant feature in a test case for a vulnerability, an identification rate of vulnerability fixing code can be effectively improved. In this way, users can discover potential vulnerabilities in advance, thereby reducing security risks.

## Description

This application claims priorities to Chinese Patent Application No. 202311402518.3, filed with the China National Intellectual Property Administration on October 26, 2023 and entitled "VULNERABILITY FIXING CODE DETECTION METHOD AND RELATED DEVICE", and to Chinese Patent Application No. 202410135488.2, filed with the China National Intellectual Property Administration on January 30, 2024 and entitled "VULNERABILITY FIXING CODE DETECTION METHOD AND RELATED DEVICE", both of which are incorporated by reference in their entireties.

### TECHNICAL FIELD

This application relates to the field of software development and test technologies, and in particular, to a vulnerability fixing code identification method and system, a compute device cluster, a computer-readable storage medium, and a computer program product.

### BACKGROUND

With continuous development of the computer field and continuous expansion of open-source communities, use of open-source software has become an important trend in the computer field. Openness of the open-source software allows anyone to view, modify, and distribute source code of the open-source software. This greatly improves development efficiency, but also brings potential risks, which may be caused by security vulnerabilities. A security vulnerability may also be referred to as a vulnerability for short, or referred to as vulnerability (vulnerability), and is a security weakness of a computer system, causing confidentiality, integrity, availability, access control, and the like of the system or application data of the system to be threatened.

Due to extensive dependency between open-source software, unfixed vulnerabilities will cause great impact and damage once exposed. Therefore, researchers and security experts may audit and analyze code of the open-source software to discover potential vulnerabilities. Once vulnerabilities of the open-source software are discovered, the vulnerabilities may be reported to a software maintenance team or a vulnerability disclosure platform to promote vulnerability fixing.

Considering openness of source code, attackers may also exploit the vulnerabilities to attack software that widely uses the open-source software, bringing unknown security risks. Therefore, most open-source contributors use a coordinated disclosure model of the vulnerabilities, allowing an open-source responsible party to have sufficient time to fix and remedy the vulnerabilities and then disclose the vulnerabilities to the public after a period of time.

However, the coordinated disclosure model results in a specific time difference between vulnerability fixing and vulnerability disclosure. Detailed information about most vulnerabilities is disclosed one week or even longer after the vulnerabilities are fixed. As a result, it is difficult for users to discover potential vulnerabilities in advance, and security risks exist.

### SUMMARY

This application provides a vulnerability fixing code identification method. In this method, identification models for a vulnerability fixing code commit and a test case commit, for example, a vulnerability fixing identification model and a vulnerability test case identification model, are constructed. An identification rate of vulnerability fixing code can be effectively increased based on a significant feature in a test case for a vulnerability. In this way, a user can discover a potential vulnerability in advance, thereby reducing a security risk. This application further provides a vulnerability fixing code identification system corresponding to the foregoing method, a compute device cluster, a computer-readable storage medium, and a computer program product.

According to a first aspect, this application provides a vulnerability fixing code identification method. Vulnerability fixing code may also be referred to as patch (patch) code, or referred to as a patch for short. The method may be performed by a vulnerability fixing code identification system. The vulnerability fixing code identification system may also be referred to as a vulnerability fixing code discovery tool and service, a vulnerability patch discovery tool and service, and a vulnerability identification tool and service, including but not limited to a known-vulnerability discovery tool and service, and an open-source vulnerability identification tool and service. The vulnerability fixing code identification system may be a software system. The software system may be an independent software system, or may be integrated into other software, for example, integrated into a software test platform or an integrated development environment in a plug-in form. The software system may be deployed in a compute device cluster, and the compute device cluster executes program code of the software system, to perform the vulnerability fixing code identification method in this application. In some examples, the vulnerability fixing code identification system may alternatively be a hardware system. When the hardware system runs, the vulnerability fixing code identification method in this application is performed.

Specifically, the vulnerability fixing code identification system obtains commit information of open-source software, where the commit information includes a code snippet in a commit and text information associated with the code snippet. Then, the vulnerability fixing code identification system inputs the commit information into a first language model for identification, to obtain function change information and test case information.

The function change information includes a function change code snippet and a function change text, and the test case information includes a test case code snippet and a test case text. The vulnerability fixing code identification system may input the function change information into a vulnerability fixing identification model, to obtain a vulnerability fixing code snippet for a target vulnerability, and input the test case information into a vulnerability test case identification model, to obtain a test case code snippet for the target vulnerability. The vulnerability fixing code identification system may input the vulnerability fixing code snippet for the target vulnerability and the test case code snippet for the target vulnerability into a second language model for integration and identification, to obtain an identification result.

In this method, both vulnerability fixing code and test case code are committed during a vulnerability fixing commit. Therefore, identification models for a vulnerability fixing code commit and a test case commit, for example, a vulnerability fixing identification model and a vulnerability test case identification model, are designed. An identification rate of vulnerability fixing code can be effectively increased based on a significant feature in a test case for a vulnerability. In this way, identification of an undisclosed vulnerability can be improved, and a vulnerability identification capability can be supplemented. In addition, in this method, that in a real development environment, vulnerability fixing and normal feature committing may be integrated is considered, which causes great noise to vulnerability fixing code identification. Therefore, before vulnerability fixing code identification is performed, a correlation between a single code commit and vulnerability fixing is first identified based on the first language model, and a function-level code snippet is accurately extracted, so that the accurate function-level code snippet is input to a downstream model through task decomposition, to complete precise identification, thereby further improving identification accuracy.

In some possible implementations, the vulnerability fixing identification model includes a vulnerability fixing code semantic identification model and a vulnerability fixing text semantic identification model, and the vulnerability test case identification model includes a vulnerability test case code semantic identification model and a vulnerability test case text semantic identification model.

The vulnerability fixing code identification system inputs the function change code snippet into the vulnerability fixing code semantic identification model, and inputs the function change text into the vulnerability fixing text semantic identification model, to obtain the vulnerability fixing code snippet for the target vulnerability based on a semantic identification result of the function change code snippet and a semantic identification result of the function change text.

The vulnerability fixing code identification system inputs the test case code snippet into the vulnerability test case code semantic identification model, and inputs the test case text into the vulnerability test case text semantic identification model, to obtain the test case code snippet for the target vulnerability based on a semantic identification result of the test case code snippet and a semantic identification result of the test case text.

In this method, vulnerability fixing code is identified from the function change dimension and the test case dimension, and code semantic identification and text semantic identification are separately performed for the function change and the test case. In this way, identification rate and accuracy of vulnerability fixing code can be further improved, and vulnerability patch discovery and undisclosed vulnerability identification can be effectively completed.

In some possible implementations, the vulnerability fixing code identification system may obtain code data from a vulnerability fixing dataset or a vulnerability test case dataset, preprocess the code data to obtain a full code difference and a function-level code difference with a vulnerability label, and input the full code difference into a pre-trained language model for fine-tuning, to obtain a fine-tuned model. The vulnerability fixing code identification system further inputs the function-level code difference with the vulnerability label into the fine-tuned model, to obtain a representation of the function-level code difference, obtains a commit representation based on the representation of the function-level code difference, and inputs the commit representation into a classifier for training, to obtain the code semantic identification model.

In this method, the pre-trained language model is first fine-tuned by using the full code difference, and then the fine-tuned model is used to perform feature extraction on the function-level code difference, to input the representation of the function-level code difference into the classifier for training. The code semantic identification model can be obtained through training without a large amount of function-level patch data, thereby resolving a problem of lacking function-level patch data in open-source vulnerability patch data.

In some possible implementations, the vulnerability fixing code identification system may further obtain text data from a vulnerability fixing dataset or a vulnerability test case dataset, then search a vulnerability description knowledge base based on the text data, to obtain vulnerability description knowledge corresponding to the text data, and search a vulnerability common weakness enumeration (Common Weakness Enumeration, CWE) database based on the text data, to obtain CWE knowledge corresponding to the text data. The vulnerability fixing code identification system may concatenate the text data, the vulnerability description knowledge, and the CWE knowledge into prompt information, and input the prompt information into a general language model for training, to obtain the text semantic identification model. The general language model may be a language model used in different fields for question answering and conversation. In some examples, the prompt information may be prompt information for vulnerability patch identification, and the general language model may output a category based on the prompt information, to determine whether there is a vulnerability patch. For example, the general language model may output a category 0 or a category 1, where the category 0 is used to identify a non-patch, and the category 1 is used to identify a patch.

In this method, the prompt information is constructed with reference to the vulnerability description knowledge and the CWE knowledge, and the prompt information is used as input for model training. This can reduce an amount of required training data on the one hand, and improve training efficiency on the other hand.

In some possible implementations, the dataset is constructed in the following manner:
establishing an association relationship between a vulnerability fixing code sample and CWE information;
inputting the vulnerability fixing code sample into a vulnerability fixing code analysis engine, to obtain a function change code sample and a test case code sample;
obtaining, based on the function change code sample, a vulnerability fixing code sample for a vulnerability and a corresponding function description by using prompt information and a language model, and obtaining, based on the test case code sample, a vulnerability test case code sample for the vulnerability and a corresponding function description by using prompt information and a language model; and
storing metadata of the vulnerability, the CWE information, and the vulnerability fixing code sample and the corresponding function description into the vulnerability fixing dataset, and/or storing the metadata of the vulnerability, the CWE information, and the vulnerability test case code sample and the corresponding function description into the vulnerability test case dataset.

In this way, a function-level vulnerability fixing dataset and a function-level vulnerability test case dataset can be constructed, to resolve the problem of lacking function-level patch data in current open-source vulnerability patch data. In addition, the foregoing dataset may be used to construct a vulnerability fixing corpus pair and a vulnerability test case corpus pair, and the first language model used for task decomposition may be trained based on the vulnerability fixing corpus pair and the vulnerability test case corpus pair, to help improve a patch identification rate.

In some possible implementations, the first language model may be obtained through training in the following manner:
obtaining a vulnerability fixing corpus pair and a vulnerability test case corpus pair, where the vulnerability fixing corpus pair includes the vulnerability fixing code sample and associated CWE information, and the vulnerability test case corpus pair includes the vulnerability test case sample and associated CWE information; and inputting the vulnerability fixing corpus pair and the vulnerability test case corpus pair into a pre-trained model for supervised fine-tuning, to obtain the first language model.

In the method, the first language model used for task decomposition is obtained by performing supervised fine-tuning on the pre-trained model by using the vulnerability fixing corpus pair and the vulnerability test case corpus pair, so that the first language model can implement function-level data extraction, and decompose a task into vulnerability fixing identification and vulnerability test case identification. Fine-grained task decomposition can improve an identification rate of a decomposed task, thereby improving an overall identification rate.

In some possible implementations, the vulnerability fixing code identification system may obtain vulnerability metadata from a vulnerability library, and then obtain the commit information of the open-source software based on the vulnerability metadata. In this way, vulnerability fixing code (patch) discovery for a known vulnerability can be implemented. On the one hand, a vulnerability-related database can be enriched, and on the other hand, version iteration can be performed by using discovered vulnerability fixing code. For example, version iteration is performed on a user branch, to reduce a security risk.

In some possible implementations, the vulnerability fixing code identification system may monitor an open-source repository to obtain the commit information of the open-source software. In this way, whether a code commit is a vulnerability patch can be identified, and an undisclosed vulnerability can be further identified, thereby improving the vulnerability identification capability.

In some possible implementations, the first language model or the second language model is a large language model (large language model, LLM). In this method, the large language model is used for data processing, to resolve a problem that a conventional identification method based on code semantics and commit text information is limited by a small amount of patch data and missing CWE mapping.

According to a second aspect, this application provides a vulnerability fixing code identification system. The system includes:
an obtaining module, configured to obtain commit information of open-source software, where the commit information includes a code snippet in a commit and text information associated with the code snippet;
a decomposition module, configured to input the commit information into a first language model for identification, to obtain function change information and test case information, where the function change information includes a function change code snippet and a function change text, and the test case information includes a test case code snippet and a test case text;
an identification module, configured to: input the function change information into a vulnerability fixing identification model, to obtain a vulnerability fixing code snippet for a target vulnerability, and input the test case information into a vulnerability test case identification model, to obtain a test case code snippet for the target vulnerability; and
an integration module, configured to input the vulnerability fixing code snippet for the target vulnerability and the test case code snippet for the target vulnerability into a second language model for integration and identification, to obtain an identification result.

In some possible implementations, the vulnerability fixing identification model includes a vulnerability fixing code semantic identification model and a vulnerability fixing text semantic identification model, and the vulnerability test case identification model includes a vulnerability test case code semantic identification model and a vulnerability test case text semantic identification model.

The identification module is specifically configured to:
input the function change code snippet into the vulnerability fixing code semantic identification model, and input the function change text into the vulnerability fixing text semantic identification model, to obtain the vulnerability fixing code snippet for the target vulnerability based on a semantic identification result of the function change code snippet and a semantic identification result of the function change text; and
input the test case code snippet into the vulnerability test case code semantic identification model, and input the test case text into the vulnerability test case text semantic identification model, to obtain the test case code snippet for the target vulnerability based on a semantic identification result of the test case code snippet and a semantic identification result of the test case text.

In some possible implementations, the system further includes:
a training module, configured to: obtain code data from a vulnerability fixing dataset or a vulnerability test case dataset, preprocess the code data to obtain a full code difference and a function-level code difference with a vulnerability label, and input the full code difference into a pre-trained language model for fine-tuning, to obtain a fine-tuned model.

The training module is further configured to: input the function-level code difference with the vulnerability label into the fine-tuned model, to obtain a representation of the function-level code difference; and obtain a commit representation based on the representation of the function-level code difference, and input the commit representation into a classifier for training, to obtain the code semantic identification model.

In some possible implementations, the system further includes:
a training module, configured to: obtain text data from a vulnerability fixing dataset or a vulnerability test case dataset, search a vulnerability description knowledge base based on the text data, to obtain vulnerability description knowledge corresponding to the text data, and search a vulnerability common weakness enumeration CWE database based on the text data, to obtain CWE knowledge corresponding to the text data.

The training module is further configured to: concatenate the text data, the vulnerability description knowledge, and the CWE knowledge into prompt information; and input the prompt information into a general language model for training, to obtain the text semantic identification model.

In some possible implementations, the system further includes:
a dataset construction module, configured to: establish an association relationship between a vulnerability fixing code sample and CWE information, and input the vulnerability fixing code sample into a vulnerability fixing code analysis engine, to obtain a function change code sample and a test case code sample; and obtain, based on the function change code sample, a vulnerability fixing code sample for a vulnerability and a corresponding function description by using prompt information and a language model; and obtain, based on the test case code sample, a vulnerability test case code sample for the vulnerability and a corresponding function description by using prompt information and a language model.

The dataset construction module is further configured to: store metadata of the vulnerability, the CWE information, and the vulnerability fixing code sample and the corresponding function description into the vulnerability fixing dataset, and/or store the metadata of the vulnerability, the CWE information, and the vulnerability test case code sample and the corresponding function description into the vulnerability test case dataset.

In some possible implementations, the system further includes:
a training module, configured to: obtain a vulnerability fixing corpus pair and a vulnerability test case corpus pair, where the vulnerability fixing corpus pair includes the vulnerability fixing code sample and associated CWE information, and the vulnerability test case corpus pair includes the vulnerability test case sample and associated CWE information; and input the vulnerability fixing corpus pair and the vulnerability test case corpus pair into a pre-trained model for supervised fine-tuning SFT, to obtain the first language model.

In some possible implementations, the obtaining module is specifically configured to:
obtain vulnerability metadata from a vulnerability library; and
obtain the commit information of the open-source software based on the vulnerability metadata.

In some possible implementations, the obtaining module is specifically configured to:
monitor an open-source repository to obtain the commit information of the open-source software.

In some possible implementations, the first language model or the second language model is a large language model LLM.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to cause the compute device or the compute device cluster to perform the vulnerability fixing code identification method according to any one of the first aspect or the implementations of the first aspect.

According to a fourth aspect, this application provides a computer-readable storage medium. The computer-readable storage medium stores instructions. The instructions instruct a compute device or a compute device cluster to perform the vulnerability fixing code identification method according to any one of the first aspect or the implementations of the first aspect.

According to a fifth aspect, this application provides a computer program product including instructions. When the computer program product runs on a compute device or a compute device cluster, the compute device or the compute device cluster is caused to perform the vulnerability fixing code identification method according to any one of the first aspect or the implementations of the first aspect.

In this application, based on the implementations of the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an application scenario of a vulnerability fixing code identification method according to this application;
FIG. 2 is a diagram of a logical procedure of a vulnerability patch identification service according to this application;
FIG. 3 is a flowchart of a vulnerability fixing code identification method according to this application;
FIG. 4 is a diagram of a construction process of a vulnerability fixing dataset and a vulnerability test case dataset according to this application;
FIG. 5 is a diagram of a construction process of a large language model fine-tuning corpus dataset according to this application;
FIG. 6 is a diagram of a construction process of a vulnerability fixing identification model and a vulnerability test case identification model according to this application;
FIG. 7 is a diagram of a construction process of a vulnerability fixing identification large language model according to this application;
FIG. 8 is a diagram of a logical procedure of a known-vulnerability patch discovery service according to this application;
FIG. 9 is a diagram of a logical procedure of open-source vulnerability identification according to this application;
FIG. 10 is a diagram of a structure of a vulnerability fixing code identification system according to this application;
FIG. 11 is a diagram of a structure of a compute device according to this application;
FIG. 12 is a diagram of a structure of a compute device cluster according to this application;
FIG. 13 is a diagram of a structure of another compute device cluster according to this application; and
FIG. 14 is a diagram of a structure of still another compute device cluster according to this application.

### DESCRIPTION OF EMBODIMENTS

Terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Open-source software is software whose source code can be publicly viewed, used, and modified. Communities can freely access, distribute, and improve the software.

A software vulnerability, also referred to as a vulnerability (vulnerability), or a vulnerability for short, is a security weakness discovered in software, for example, the open-source software. There may be a plurality of causes for a vulnerability. For example, the vulnerability may be caused by a weakness in software or operating system design or an error in coding. For another example, the vulnerability may be caused by a design weakness or an unreasonable logical procedure in a service interaction processing process. When the vulnerability is exploited, confidentiality, integrity, availability, and access control of a system or application data of the system may be threatened.

Vulnerability fixing is a process of mitigating or fixing vulnerabilities in software or a system to improve security and stability of the software or the system. Vulnerability fixing code, also referred to as a vulnerability patch (patch), or a patch for short, is a fixing program or a fixing code snippet developed by developers for discovered vulnerabilities, and is used to fix the security vulnerabilities in the software or the system.

Code review is a systematic check and evaluation process of software code, aiming to discover potential errors, vulnerabilities, low efficiency, or non-compliance with coding specifications, and to provide improvement suggestions, for ensuring software quality and security.

Open-source software commit means that software contributors in an open-source community commits code, functions, and rectification or improvement suggestions developed by the software contributors to open-source projects, to promote development and sharing of open-source software.

When performing open-source software commit, developers usually commit vulnerability fixing code in a function change form. As a result, it is difficult to identify whether an open-source software commit is vulnerability fixing code or a vulnerability patch, and consequently, it is difficult for users to discover potential vulnerabilities in advance, resulting in security risks.

Currently, the industry has proposed a solution of automatically analyzing patches of open-source projects. In this solution, patch code of vulnerabilities in all open-source projects is collected, and the patch code is classified and analyzed based on fixing types. In this way, manual check of the vulnerabilities in the open-source project is effectively reduced, to identify and classify error fixing. An analysis process is implemented by constructing an abstract syntax tree for the patch code and comparing the abstract syntax tree with an abstract syntax tree of code of the original open-source project.

However, error categories supported by the foregoing solution are six custom vulnerabilities, whose coverage is not large enough to include most hotspot problems in the open-source community. In addition, the foregoing solution is also limited by efficiency of constructing the abstract syntax tree, and is difficult to be used in a scenario of a large quantity of open-source software.

In view of this, this application provides a vulnerability fixing code identification method. The method may be performed by a vulnerability fixing code identification system. The vulnerability fixing code identification system may also be referred to as a vulnerability fixing code discovery tool and service, a vulnerability patch discovery tool and service, and a vulnerability identification tool and service, including but not limited to a known-vulnerability discovery tool and service, and an open-source vulnerability identification tool and service. The vulnerability fixing code identification system may be a software system. The software system may be an independent software system, or may be integrated into other software, for example, integrated into a software test platform or an integrated development environment (integrated development environment, IDE) in a plug-in form. The software system may be deployed in a compute device cluster, and the compute device cluster executes program code of the software system, to perform the vulnerability fixing code identification method in this application. In some other possible implementations, the vulnerability fixing code identification system may alternatively be a hardware system. When the hardware system runs, the vulnerability fixing code identification method in this application is performed.

Specifically, the vulnerability fixing code identification system obtains commit information (for example, commit information) of open-source software, where the commit information includes a code snippet in a commit and text information associated with the code snippet, and then inputs the commit information into a first large language model (large language model, LLM) for identification, to obtain function change information and test case information, where the function change information includes a function change code snippet and a function change text, and the test case information includes a test case code snippet and a test case text. The vulnerability fixing code identification system inputs the function change information into a vulnerability fixing identification model, to obtain a vulnerability fixing code snippet for a target vulnerability, and inputs the test case information into a vulnerability test case identification model, to obtain a test case code snippet for the target vulnerability. Then, the vulnerability fixing code identification system inputs the vulnerability fixing code snippet for the target vulnerability and the test case code snippet for the target vulnerability into a second LLM for integration and identification, to obtain an identification result. It should be noted that the LLM is a language model with a large parameter scale, may include an artificial neural network with a plurality of parameters (usually billions of weights or more), and is obtained by training a large quantity of unlabeled texts through self-supervised learning or semi-supervised learning. In this application, the LLM may be replaced with another language model (language model, LM). For example, the first LLM and the second LLM may be replaced with small language models that have same functions or capabilities as the first LLM and the second LLM, for example, n-gram language models. For ease of description, the following uses an example in which the language model is the LLM for description.

Both vulnerability fixing code and test case code are committed during a vulnerability fixing commit. In this method, identification models for a vulnerability fixing code commit and a test case commit, for example, a vulnerability fixing identification model and a vulnerability test case identification model, are constructed. In this way, an identification rate of vulnerability fixing code can be effectively increased based on a significant feature in a test case for a vulnerability.

Further, the method further supports construction of a patch identification large language model, for example, the foregoing first LLM, that has vulnerability patch identification knowledge and completes task decomposition on code commit. In most patch identification solutions, input code of a model is at a commit level or a file level. In a real development environment, contributors generally integrates vulnerability fixing and normal feature committing, causing great noise to vulnerability fixing code identification. In the solution of this application, the patch identification large language model is constructed, to identify a correlation between a single code commit and vulnerability fixing, and accurately extract a function-level code snippet, so that an accurate function-level code snippet is input to a downstream model through task decomposition to complete accurate identification, thereby further improving identification accuracy. In addition, conventional identification methods based on code semantics and commit texts are limited by a small amount of patch data and missing mapping, and has a low identification rate. In this application, commit information is processed by a large language model, to decompose and analyze a vulnerability fixing identification task, thereby greatly improving the vulnerability fixing identification rate.

In addition, this solution can implement end-to-end vulnerability fixing code identification. Specifically, the vulnerability fixing code identification system performs task decomposition on identification of single commit information by using a large language model, such as the first LLM, that integrates vulnerability patch knowledge, and effectively completes, with reference to the vulnerability fixing identification model and the vulnerability test case identification model, discovery of vulnerability fixing code or identification of an undisclosed vulnerability, without manual intervention.

Open-source vulnerability data may be improved. Specifically, when it is determined that a disclosed vulnerability has a vulnerability fixing version but cannot be associated with vulnerability fixing code (patch information such as patch code), a vulnerability patch can be found by identifying and filtering code commits within a fixing range. In addition, a vulnerability may be identified before an open-source vulnerability is disclosed, to ensure security. Specifically, commit information of open-source software is monitored to identify whether the commit information includes the vulnerability fixing code (patch), thereby identifying an undisclosed vulnerability.

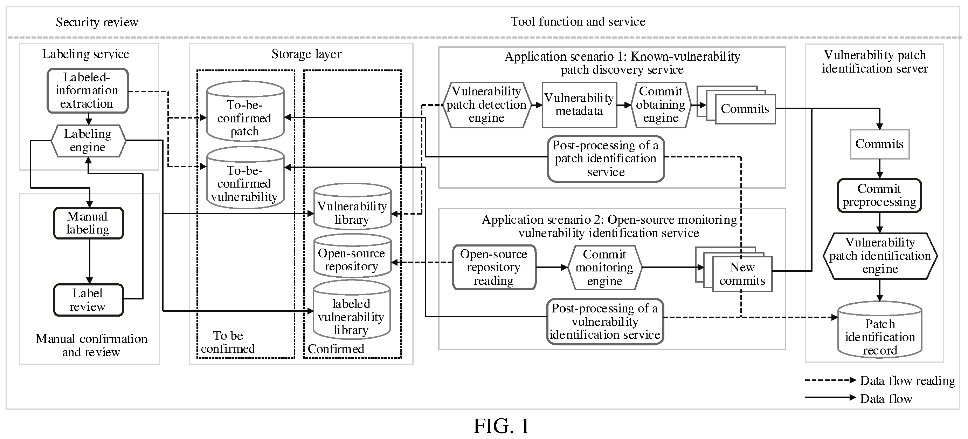

FIG. 1 shows a scenario to which the vulnerability fixing code identification method in this application may be applied. In a first application scenario, vulnerability metadata that is not associated with vulnerability fixing code (patch) is read from a vulnerability library by using a vulnerability patch detection engine, to obtain commit information. The commit information may be a commit range. To-be-confirmed vulnerability fixing code (a to-be-confirmed patch) may be obtained by using a vulnerability patch identification service (for example, a vulnerability fixing code identification system). In a second application scenario, an open-source repository may be read, and commit information of open-source software may be obtained by using an open-source monitoring engine and denoted as commits. After the obtained commits are input into the vulnerability patch identification service, a to-be-confirmed vulnerability can be obtained. For the to-be-confirmed vulnerability fixing code and the to-be-confirmed vulnerability, corresponding to-be-labeled metainformation is obtained by using a labeling service, and may be stored into the vulnerability library (or referred to as a vulnerability repository) after manual labeling and security review are completed by using a labeling engine.

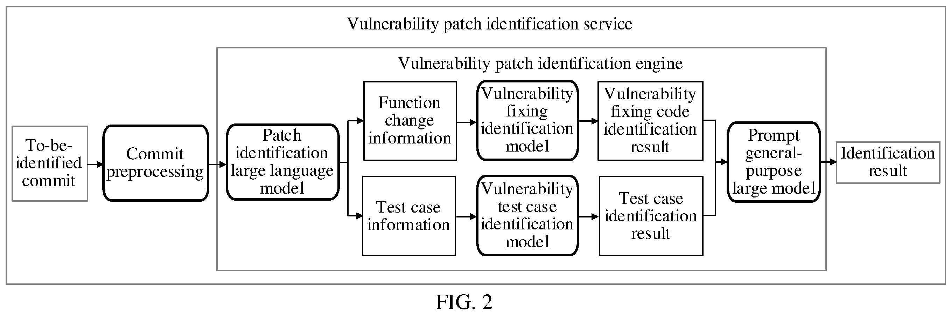

FIG. 2 further shows a logical procedure of a vulnerability patch identification service. For to-be-identified commit information (for example, commit information), code information and text information in a commit may be obtained through commit preprocessing, and the code information and the text information may be input into a vulnerability patch identification engine. Specifically, the vulnerability patch identification engine may include a first LLM, a vulnerability fixing identification model and a vulnerability test case identification model, and a second LLM. The first LLM is a patch identification large language model (also referred to as a patch LLM or a patch large model), and may identify and distribute the commit information. The second LLM may be a large model for integrating and determining to obtain a final identification result.

The commit information is identified and distributed through the patch large model, to obtain function change information and test case information. The function change information includes a function change code snippet and a function change text that are related to vulnerability fixing, and the test case information includes a test case code snippet and a test case text (for example, a description text). The function change information may be input into a vulnerability fixing identification model, to obtain a vulnerability fixing code identification result, for example, a vulnerability fixing code snippet for a target vulnerability. The test case change information may be input into a vulnerability test case identification model, to obtain a test case identification result, for example, a test case code snippet for the target vulnerability. A pre-result (for example, the vulnerability fixing code identification result and the vulnerability test case identification result) may be input into the second LLM (which may be generally a general large model) including identification task prompt information (prompt) to complete information integration and identification, to obtain an identification result.

The following describes in detail a vulnerability fixing code identification method in this application with reference to the accompanying drawings.

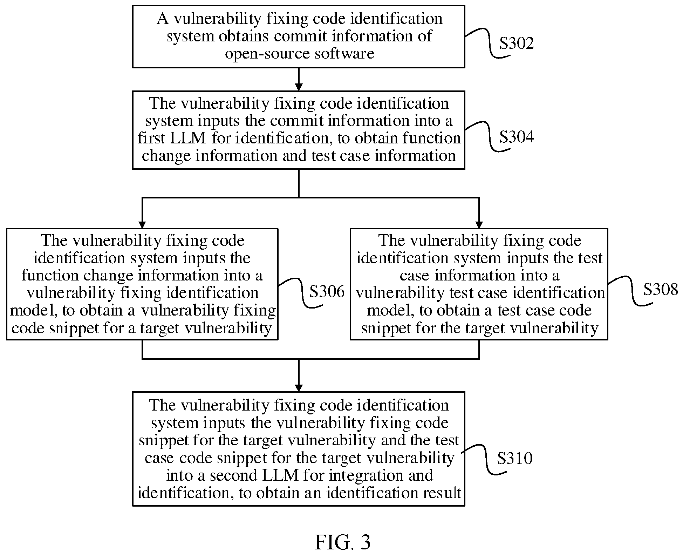

FIG. 3 shows a flowchart of a vulnerability fixing code identification method. The method may be performed by a vulnerability fixing code identification system, and includes the following steps.

S302: The vulnerability fixing code identification system obtains commit information of open-source software.

The commit information includes a code snippet in a commit and text information associated with the code snippet. The code snippet in the commit may include a function change code snippet, and the function change code snippet may be a code snippet of a newly added function, or a vulnerability fixing code snippet. It should be noted that when the vulnerability fixing code snippet is committed, generally, a test case code snippet is also committed. In view of this, the code snippet in the commit may further include a test case code snippet. The text information associated with the code snippet may include a note, a comment (comment), or a commit message (commit message).

The vulnerability fixing code identification system may be used in different scenarios, and obtain the commit information of the open-source software in different manners.

In some possible implementations, the vulnerability fixing code identification system may obtain vulnerability metadata from a vulnerability library, and then obtain the commit information of the open-source software based on the vulnerability metadata. Specifically, the vulnerability fixing code identification system may first obtain, from a labeled vulnerability library, data of a vulnerability for which vulnerability fixing code (a patch) needs to be discovered, input the vulnerability data into a vulnerability patch detection engine to obtain vulnerability metadata, and input the vulnerability metadata into a commit obtaining engine to obtain a to-be-identified commit group.

In some other possible implementations, the vulnerability fixing code identification system may monitor an open-source repository to obtain the commit information of the open-source software. Specifically, the vulnerability fixing code identification system may obtain a to-be-monitored open-source repository from an open-source software library, and then input the open-source repository into a commit monitoring engine to obtain a new commit group.

S304: The vulnerability fixing code identification system inputs the commit information into a first LLM for identification, to obtain function change information and test case information.

The function change information includes the function change code snippet and a function change text, and the test case information includes the test case code snippet and a test case text. The first LLM is a task decomposition model, and is configured to decompose a commit information identification task into an identification subtask based on the function change information and an identification subtask based on the test case information. In some cases, tasks obtained through decomposition may further include an association subtask, for example, a message association subtask. An input of the first LLM may be the commit information, and an output of the first LLM may be the function change information and the test case information. In this way, a problem of a vulnerability fixing code identification rate can be resolved.

In some possible implementations, the commit information may be at a commit level or a file level. The first LLM may decompose the commit information into function-level information. In this case, the output of the first LLM may be function-level function change information and test case information.

S306: The vulnerability fixing code identification system inputs the function change information into a vulnerability fixing identification model, to obtain a vulnerability fixing code snippet for a target vulnerability.

S308: The vulnerability fixing code identification system inputs the test case information into a vulnerability test case identification model, to obtain a test case code snippet for the target vulnerability.

The function change information includes the function change code snippet and the function change text. Similarly, the test case information includes the test case code snippet and the test case text. Code and a text are different types of data. When identifying the function change information or the test case information, the vulnerability fixing code identification system may separately perform semantic identification on the code and the text.

In some possible implementations, the vulnerability fixing identification model includes a vulnerability fixing code semantic identification model and a vulnerability fixing text semantic identification model, and the vulnerability test case identification model includes a vulnerability test case code semantic identification model and a vulnerability test case text semantic identification model. Correspondingly, the vulnerability fixing code identification system may input the function change code snippet into the vulnerability fixing code semantic identification model, and input the function change text into the vulnerability fixing text semantic identification model, to obtain the vulnerability fixing code snippet for the target vulnerability based on a semantic identification result of the function change code snippet and a semantic identification result of the function change text. The vulnerability fixing code identification system may input the test case code snippet into the vulnerability test case code semantic identification model, and input the test case text into the vulnerability test case text semantic identification model, to obtain the test case code snippet for the target vulnerability based on a semantic identification result of the test case code snippet and a semantic identification result of the test case text.

It should be noted that S306 and S308 may be performed in parallel, or may be performed in a specified sequence. For example, S306 may be performed first, and then S308 is performed. This is not limited in this embodiment.

S310: The vulnerability fixing code identification system inputs the vulnerability fixing code snippet for the target vulnerability and the test case code snippet for the target vulnerability into a second LLM for integration and identification, to obtain an identification result.

Specifically, the second LLM may integrate, for example, concatenate the vulnerability fixing code snippet for the target vulnerability and the test case code snippet for the target vulnerability, to obtain prompt information. Then, the second LLM performs vulnerability fixing identification based on the prompt information, and obtains the identification result of the vulnerability fixing code. The vulnerability fixing code identification system may obtain the identification result returned by the second LLM.

Based on the foregoing content descriptions, this application provides a vulnerability fixing code identification method. In this method, a code semantic analysis model for test case code and the test case code is used to determine vulnerability fixing, where a vulnerability test case is identified, to improve identification of a public but undisclosed vulnerability and supplement a vulnerability identification capability. In addition, in this method, commit information identification is decomposed, by a large language model like the first LLM, into subtasks such as vulnerability fixing code identification and vulnerability fixing test case identification, to improve the vulnerability fixing code identification rate.

The first LLM in the embodiment of FIG. 3 may be obtained by performing supervised fine-tuning (supervised fine-tuning, SFT) on a pre-trained large model. In this application, an example in which the vulnerability fixing code identification system obtains the first LLM through training is used for description. Specifically, the vulnerability fixing code identification system may obtain a vulnerability fixing corpus pair and a vulnerability test case corpus pair. The vulnerability fixing corpus pair includes a vulnerability fixing code sample and associated vulnerability common weakness enumeration (Common Weakness Enumeration, CWE) information, and may be denoted as a CWE-vulnerability fixing corpus pair. The vulnerability test case corpus pair includes a vulnerability test case sample and associated CWE information, and may be denoted as a CWE-vulnerability test case corpus pair. The vulnerability fixing code identification system inputs the vulnerability fixing corpus pair and the vulnerability test case corpus pair into the pre-trained large model for SFT, to obtain the first LLM.

The vulnerability fixing code identification system may include a patch identification large language model construction engine. The patch identification large language model construction engine may combine the CWE-vulnerability fixing corpus pair and the CWE-vulnerability test case corpus pair into training text data, and use the training text data as a dataset to train the pre-trained large model. The patch identification large language model construction engine may adjust a parameter of the pre-trained large model through SFT, and obtain a patch identification large language model through a plurality of rounds of training, which is specifically the foregoing first LLM.

SFT means pre-training a neural network model, namely, a source model, based on a source dataset, and then creating a new neural network model, namely, a target model. The target model copies all model designs excluding an output layer and their parameters from the source model. These model parameters include knowledge learned from the source dataset, and the knowledge is also applicable to a target dataset. The output layer of the source model is closely related to a label of the source dataset, and therefore is not used in the target model. During fine-tuning, an output layer whose output size equals a quantity of categories of the target dataset is added to the target model, and model parameters of the layer are randomly initialized. When the target model is trained based on the target dataset, the output layer is trained from scratch, and parameters of a remaining layer are obtained through fine-tuning based on the parameters of the source model. In this embodiment, the target dataset may be the dataset formed by the CWE-vulnerability fixing corpus pair and the CWE-vulnerability test case corpus. The source model may be the pre-trained large model. The target model may be obtained by replacing the output layer of the source model with the output layer whose output size equals the quantity of categories of the target dataset, randomly initializing the parameters of the output layer, and then training the target model based on the target dataset, to obtain the first LLM.

In the embodiment of FIG. 3, construction manners of code semantic identification models of different code are similar, and construction manners of text semantic identification models of different texts are similar. The following separately describes construction of the code semantic identification model and construction of the text semantic identification model.

In some possible implementations, the vulnerability fixing code identification system may obtain code data from a vulnerability fixing dataset or a vulnerability test case dataset, preprocess the code data to obtain a full code difference and a function-level code difference with a vulnerability label, input the full code difference into a pre-trained language model for fine-tuning to obtain a fine-tuned model, and input the function-level code difference with the vulnerability label into the fine-tuned model to obtain a representation of the function-level code difference. The vulnerability fixing code identification system may obtain a commit representation based on the representation of the function-level code difference, for example, obtain the commit representation by integrating representations of a plurality of functions in one piece of commit information. Then, the vulnerability fixing code identification system may input the commit representation into a classifier for training, to obtain the code semantic identification model.

In some other possible implementations, the vulnerability fixing code identification system may obtain text data from a vulnerability fixing dataset or a vulnerability test case dataset, search a vulnerability description knowledge base based on the text data, to obtain vulnerability description knowledge corresponding to the text data, and search a vulnerability common weakness enumeration CWE database based on the text data, to obtain CWE knowledge corresponding to the text data. Then, the vulnerability fixing code identification system concatenates the text data, the vulnerability description knowledge, and the CWE knowledge into prompt information, and inputs the prompt information into a general-purpose large model for training, to obtain the text semantic identification model.

To make the technical solutions of this application clearer, the following describes the technical solutions in terms of dataset construction, identification model construction, vulnerability patch engine construction, known-vulnerability patch discovery service construction, and the like.

It is difficult to obtain vulnerability fixing code of open-source software. Constructing a vulnerability fixing dataset (or referred to as a patch dataset) is a long-term and complex process. This is mainly because a developer of the open-source software does not directly provide the vulnerability fixing code (patch code) but expects a user to upgrade the software to a version in which a vulnerability has been fixed. In view of this, vulnerability fixing code data, also referred to as a vulnerability fixing code sample, maybe obtained from a plurality of ways such as an official website of the open-source software, a code repository of the open-source software, a security community, and a third-party vulnerability library. In this solution, a vulnerability CVE number and a corresponding commit list obtained from the foregoing paths are used as inputs for constructing the vulnerability fixing dataset, that is, patch data.

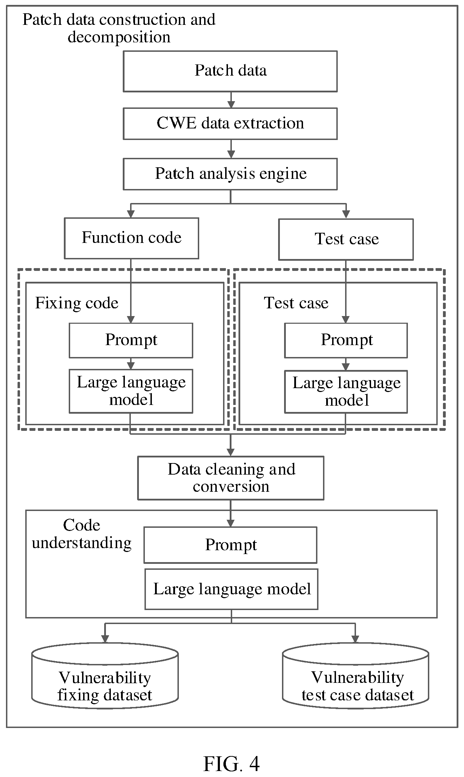

FIG. 4 shows a construction process of a vulnerability fixing dataset and a vulnerability test case dataset, including key steps of constructing a function-level vulnerability fixing dataset. First, an association between a vulnerability fixing code sample and CWE information is established, and then the vulnerability fixing code sample is input into a vulnerability fixing code analysis engine (patch analysis engine), to determine which part of the vulnerability fixing code sample (patch data) is a test case and determine which part is function change code related to vulnerability fixing, so that a function change code sample and a test case code sample are obtained.

Prompt information and a large language model are used based on the function change code sample, to obtain a vulnerability fixing code sample for a vulnerability and a corresponding function description. Prompt information and a large language model are used based on the test case code sample, to obtain a vulnerability test case code sample for the vulnerability and a corresponding function description.

Specifically, when the function change code sample and the test case code sample are identified, the prompt information (prompt) and the large language model may be used to separately construct a fixing code identification module for analyzing function code and a vulnerability test case identification module. The test case code may be input into the vulnerability test case identification module to obtain test case code for the vulnerability. The function change code sample may be input into the vulnerability fixing code identification module to obtain vulnerability fixing code for the vulnerability.

Then, a code understanding module is constructed based on the prompt and the large language model. A function of the code understanding module may be describing a complete function of a code snippet. After data cleaning is performed on the test case code and the vulnerability fixing code, the test case code and the vulnerability fixing code are input into the code understanding module, to obtain a function description of a corresponding code snippet.

Then, metadata of the vulnerability, the CWE information, and the vulnerability fixing code sample and the corresponding function description are stored into the vulnerability fixing dataset, and/or metadata of the vulnerability, the CWE information, and the vulnerability test case code sample and the corresponding function description are stored into the vulnerability test case dataset. During specific implementation, the metadata of the vulnerability, the CWE information, and the vulnerability fixing code, the description of the vulnerability fixing code, the test case code, and the description of the test case code that are output in the foregoing steps may be combined, and separately stored into a database, to obtain the vulnerability fixing dataset and the vulnerability test case dataset.

In addition to the foregoing dataset for training the vulnerability fixing identification model and the dataset for training the vulnerability test case identification model, a large language model fine-tuning corpus dataset may be further constructed. The large language model fine-tuning corpus dataset is used for training to obtain a first LLM.

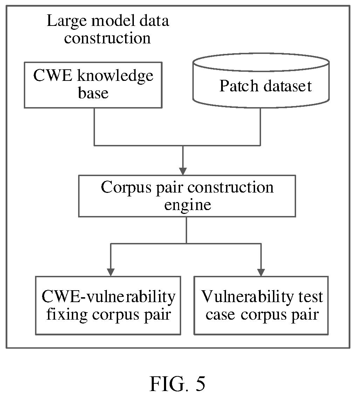

FIG. 5 shows construction of the large language model fine-tuning corpus dataset. A CWE knowledge base and the foregoing patch dataset are input into a corpus pair construction engine. In the corpus pair construction engine, each vulnerability fixing code snippet and code description of the vulnerability fixing code snippet, a corresponding vulnerability description, a corresponding CWE description, and corresponding original code are concatenated into a task-decomposed text segment, to cause, by constructing the data, the large language model to learn to determine which part of a code snippet is vulnerability fixing code. In this solution, the part of the code snippet is referred to as a CWE-vulnerability fixing corpus pair. Similarly, the vulnerability test case code can be used to generate a CWE-vulnerability test case corpus pair.

Training data construction required in this solution is completed by performing the foregoing two steps, and the vulnerability fixing dataset, the vulnerability test case dataset, the CWE-vulnerability fixing corpus pair, and the CWE-vulnerability test case corpus pair are obtained.

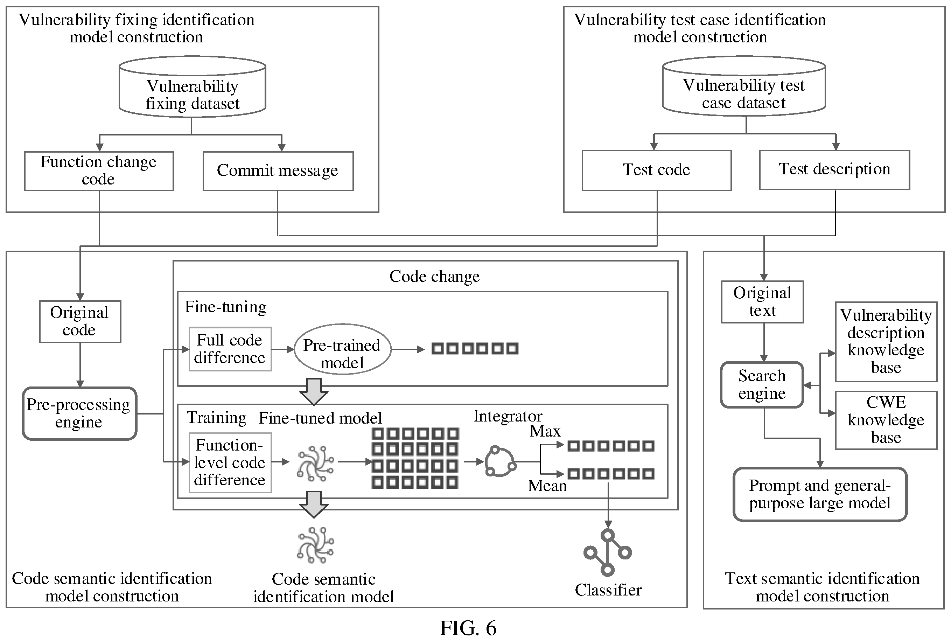

Next, a vulnerability identification model, like a vulnerability fixing identification model or a vulnerability test case identification model is constructed. As shown in FIG. 6, after a vulnerability fixing dataset is constructed for the first time or a vulnerability fixing dataset is updated, a vulnerability fixing identification model in this solution may be trained by using the dataset.

For different datasets, for example, a vulnerability fixing dataset and a vulnerability test case dataset, manners of training a code semantic identification model and a text semantic identification model are basically the same.

For the vulnerability fixing dataset, the dataset is split into a code change (denoted as the code change, or referred to as a function change code snippet) and text information (for example, a commit message commit message, denoted as a commit msg). Then, the code change is input into a code semantic identification model construction engine, to obtain a code semantic identification model 1 for vulnerability fixing, and the text information is input into a text semantic identification model construction engine, to obtain a text semantic identification model 1 for vulnerability fixing.

For the vulnerability test case dataset, the dataset is split into test code (denoted as test code) and a test description text (test description, or denoted as test desc). Then, the test code is input into a code semantic identification model construction engine, to obtain a code semantic identification model 2 for a vulnerability test case; and the commit test description text is input into a text semantic identification model construction engine, to obtain a text semantic identification model 2 for a vulnerability test case.

The code semantic identification model may be constructed by the code semantic identification model construction engine. The code semantic identification model construction engine may obtain code data (such as source code data or test code data) from the vulnerability fixing dataset or the vulnerability test case dataset, and then preprocesses the code data to obtain a full code difference and a function-level code difference with a vulnerability label. The full code difference is for training a fine-tuned model, and the function-level code differences with the vulnerability label is for training a patch classification model (for example, the code semantic identification model for vulnerability fixing). The code semantic identification model construction engine may input the full code difference into a pre-trained language model for fine-tuning, to obtain the fine-tuned model. Choices of the pre-trained language model include but are not limited to CodeBert, SecureBert, and the like. The code semantic identification model construction engine inputs the function-level code difference with the vulnerability label into the fine-tuned model, to obtain a representation of the function-level code difference, obtains a commit representation based on the representation of the function-level code difference, and inputs the commit representation into a classifier for training, to obtain the code semantic identification model. Specifically, for representations of same commit information, commit representations of the commit information may be obtained by using an integrator, and the commit representation are input into a classifier for training, to obtain the code semantic identification model for vulnerability fixing (which is mainly used to classify vulnerability fixing code, and is also referred to as a patch classification model or a patch identification model). Choices of the classifier include but are not limited to machine learning classification models such as a random forest, a multi-layer perceptron, and XGBoost.

The text semantic identification model may be constructed by the text semantic identification model construction engine. A specific procedure is as follows: First, the text semantic identification model construction engine uses input original text information (or referred to as text data), via a search engine, to obtain, from a vulnerability description knowledge base, vulnerability description knowledge corresponding to the original text information, for example, vulnerability description knowledge similar to the original text information. The text semantic identification model construction engine then obtains, from a CWE knowledge base, CWE knowledge similar to the original text information. Finally, the text semantic identification model construction engine combines the input original text information, the vulnerability description knowledge, and the CWE knowledge into a prompt for vulnerability fixing code identification, inputs the prompt into a general-purpose large model, and determines, based on a category 0 or 1 output by the large model, whether a commit is a vulnerability patch. The general-purpose large model includes but is not limited to question-answering large models provided by different vendors.

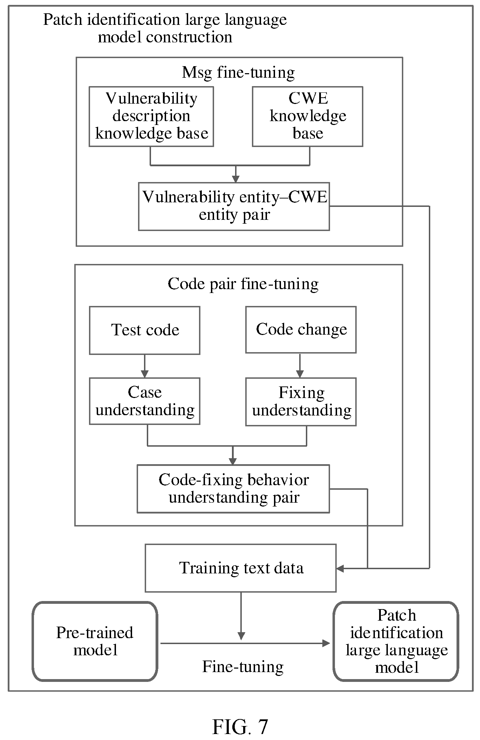

FIG. 7 further shows a construction procedure of a vulnerability fixing identification large language model. The vulnerability fixing identification large language model, or referred to as a patch identification large language model, is specifically the foregoing first LLM. The model may be constructed by a patch identification large language model construction engine. As shown in FIG. 7, a patch identification large language model construction engine combines a CWE-vulnerability fixing corpus pair and a CWE-vulnerability test case corpus pair into training text data. Specifically, the patch identification large language model construction engine may perform case understanding on the CWE-vulnerability test case corpus pair, perform fixing understanding on the CWE-vulnerability fixing corpus pair, and then obtain a code-fixing behavior understanding pair. The code-fixing behavior understanding pair and a vulnerability entity-CWE entity pair (for example, the CWE-vulnerability fixing corpus pair and the CWE-vulnerability test case corpus pair) may form the training text data (train text data). The patch identification large language model construction engine uses the training text data as a dataset to train a pre-trained large language model, adjusts a parameter of the pre-trained large model through SFT, and obtains the patch identification large language model through a plurality of rounds of training.

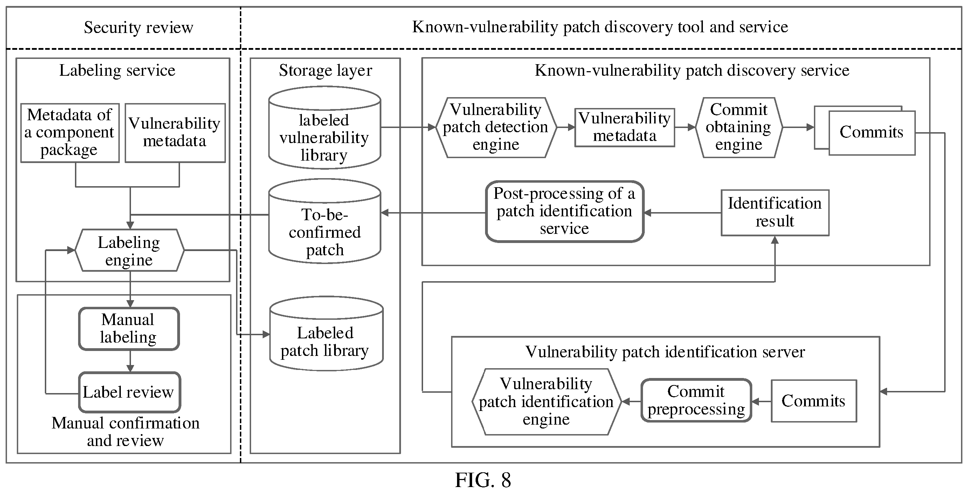

As shown in FIG. 8, a known-vulnerability patch discovery service in this embodiment is defined based on the models in FIG. 6, for example, the code semantic identification model 1 for vulnerability fixing, the text semantic identification model 1 for vulnerability fixing, the code semantic identification model 2 for a vulnerability test case, and the text semantic identification model 2 for a vulnerability test case.

The known-vulnerability patch discovery service may be combined with a vulnerability patch identification service to identify vulnerability fixing code of a known vulnerability. An identification result may be stored at a storage layer and can be interconnected with a labeling service, and a manual confirmation and review system. The following describes a known-vulnerability discovery process in detail.

First, data of a vulnerability for which a patch needs to be discovered is obtained from a labeled vulnerability library, the data of the vulnerability is input into a vulnerability patch detection engine to obtain vulnerability metadata, and the vulnerability metadata is input into a commit obtaining engine to obtain a to-be-identified commit group. The obtained commit group is input into a vulnerability patch identification server to obtain an identification result, and then a to-be-confirmed patch may be obtained through post-processing of a patch identification service. The to-be-confirmed patch may be stored into a database.

Second, the to-be-confirmed patch, metadata of a component package to which the patch belongs, and vulnerability-related metadata may form a to-be-labeled patch data pair in a triplet form. A to-be-labeled patch data pair that is confirmed, through manual labeling and label review, to be a patch is labeled as 1, and a to-be-labeled patch data pair that is confirmed not to be a patch is labeled as 0, which are finally stored into a labeled patch library.

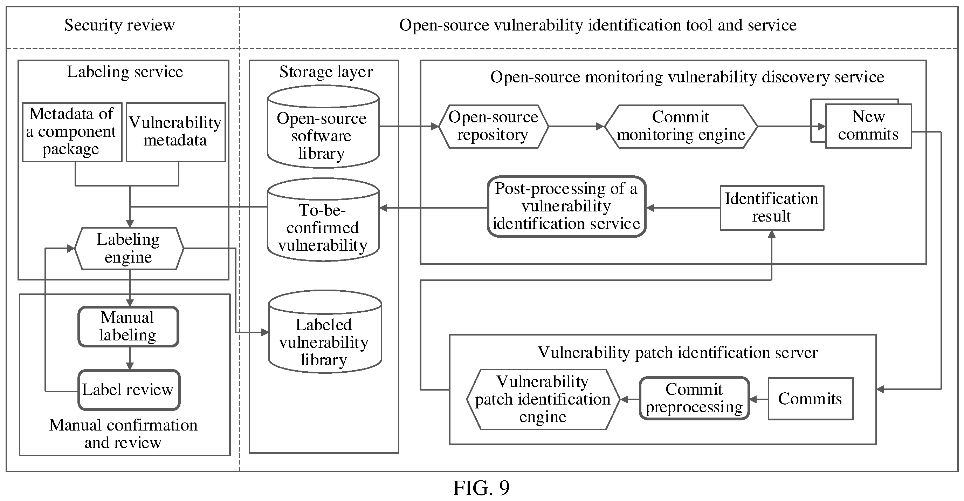

As shown in FIG. 9, an open-source vulnerability identification tool service in this embodiment is defined based on the models in FIG. 6, for example, the code semantic identification model 1 for vulnerability fixing, the text semantic identification model 1 for vulnerability fixing, the code semantic identification model 2 for a vulnerability test case, and the text semantic identification model 2 for a vulnerability test case.

An open-source vulnerability identification service may be combined with a vulnerability patch identification service, to identify an open-source vulnerability. An identification result may be stored at a storage layer and can be interconnected with a labeling service, and a manual confirmation and review system. The following describes an open-source vulnerability identification process in detail.

First, a to-be-monitored open-source repository is obtained from an open-source software library, and the open-source repository is input into a commit monitoring engine to obtain a new commit group. The obtained commit group is input into a vulnerability patch identification server to obtain an identification result, and then a to-be-confirmed vulnerability is obtained through post-processing of a vulnerability identification service and is stored into a database.

Second, the to-be-confirmed vulnerability, metadata of a component package to which the vulnerability belongs, and vulnerability-related metadata may form a to-be-labeled vulnerability data pair in a triplet form. A to-be-labeled vulnerability data pair that is confirmed, through manual labeling and label review, to be a vulnerability is labeled as 1, and a to-be-labeled vulnerability data pair that is confirmed not to be a vulnerability is labeled as 0, which are finally stored into a labeled vulnerability library.

Based on the foregoing content descriptions, it can be learned that, in the method of this application, a large language model is trained, based on a vulnerability-related corpus, a vulnerability-related knowledge base, and a function-level patch corpus, to complete function-level code snippet identification and a task decomposition task. Patch identification is decomposed, by the large language model, into subtasks such as vulnerability fixing code identification, vulnerability fixing test case identification, and message association, to resolve a problem of a low vulnerability patch identification rate. In the method, a function-level vulnerability fixing dataset is constructed based on the large language model, to resolve a problem of lacking function-level patch data in current open-source vulnerability patch data. In this method, a code semantic analysis model for a vulnerability test case is constructed, and test case code is used to determine vulnerability fixing, to improve identification of a public but undisclosed vulnerability and supplement a vulnerability identification capability.

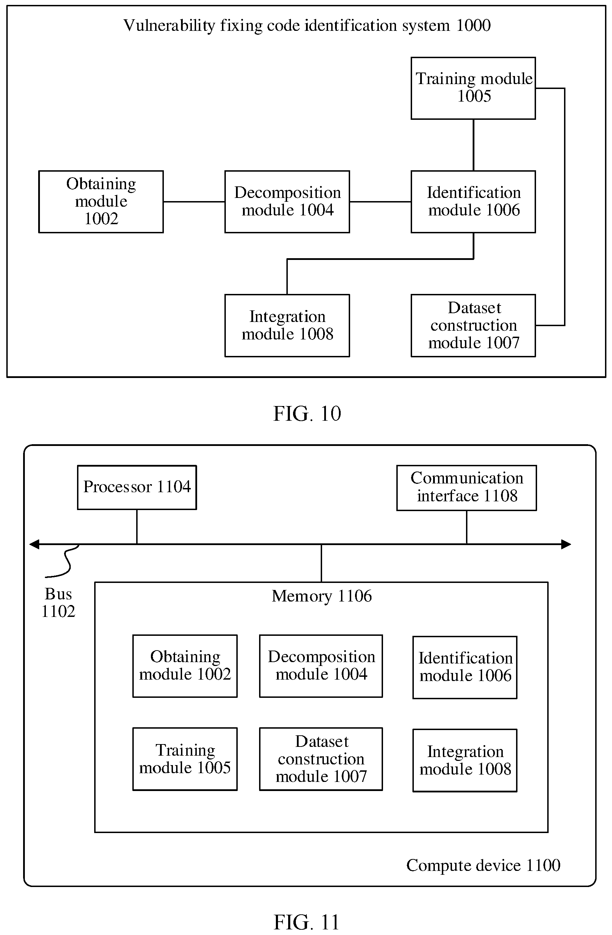

According to the foregoing vulnerability fixing code identification method, this application further provides a vulnerability fixing code identification system. As shown in FIG. 10, the vulnerability fixing code identification system 1000 includes:
an obtaining module 1002, configured to obtain commit information of open-source software, where the commit information includes a code snippet in a commit and text information associated with the code snippet;
a decomposition module 1004, configured to input the commit information into a first language model for identification, to obtain function change information and test case information, where the function change information includes a function change code snippet and a function change text, and the test case information includes a test case code snippet and a test case text;
an identification module 1006, configured to: input the function change information into a vulnerability fixing identification model, to obtain a vulnerability fixing code snippet for a target vulnerability, and input the test case information into a vulnerability test case identification model, to obtain a test case code snippet for the target vulnerability; and
an integration module 1008, configured to input the vulnerability fixing code snippet for the target vulnerability and the test case code snippet for the target vulnerability into a second language model for integration and identification, to obtain an identification result.

For example, the obtaining module 1002, the decomposition module 1004, the identification module 1006, and the integration module 1008 may be implemented by using hardware, or may be implemented by using software.

When implemented by using software, the obtaining module 1002, the decomposition module 1004, the identification module 1006, or the integration module 1008 may be an application program running on a compute device. The application program may be provided for a user in a form of a virtualization service. The virtualization service may include a virtual machine (virtual machine, VM) service, a bare metal server (bare metal server, BMS) service, or a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the obtaining module 1002, the decomposition module 1004, the identification module 1006, or the integration module 1008 may include at least one compute device, for example, a server. Alternatively, the obtaining module 1002, the decomposition module 1004, the identification module 1006, or the integration module 1008 may alternatively be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

In some possible implementations, the vulnerability fixing identification model includes a vulnerability fixing code semantic identification model and a vulnerability fixing text semantic identification model, and the vulnerability test case identification model includes a vulnerability test case code semantic identification model and a vulnerability test case text semantic identification model.

The identification module 1006 is specifically configured to:
input the function change code snippet into the vulnerability fixing code semantic identification model, and input the function change text into the vulnerability fixing text semantic identification model, to obtain the vulnerability fixing code snippet for the target vulnerability based on a semantic identification result of the function change code snippet and a semantic identification result of the function change text; and
input the test case code snippet into the vulnerability test case code semantic identification model, and input the test case text into the vulnerability test case text semantic identification model, to obtain the test case code snippet for the target vulnerability based on a semantic identification result of the test case code snippet and a semantic identification result of the test case text.

In some possible implementations, the system 1000 further includes:
a training module 1005, configured to: obtain code data from a vulnerability fixing dataset or a vulnerability test case dataset, preprocess the code data to obtain a full code difference and a function-level code difference with a vulnerability label, and input the full code difference into a pre-trained language model for fine-tuning, to obtain a fine-tuned model.

The training module 1005 is further configured to: input the function-level code difference with the vulnerability label into the fine-tuned model, to obtain a representation of the function-level code difference; and obtain a commit representation based on the representation of the function-level code difference, and input the commit representation into a classifier for training, to obtain the code semantic identification model.

Similar to the obtaining module 1002, the decomposition module 1004, the identification module 1006, the integration module 1008, or the training module 1005 may be implemented by using software or hardware. When implemented by software, the training module 1005 may be an application program running on the compute device. The application program may be provided for a user in a form of a virtualization service. The virtualization service may include a VM service, a BMS service, or a container service. When implemented by hardware, the training module 1005 may include at least one compute device, such as a server. Alternatively, the training module 1005 may be a device implemented by using an ASIC or a PLD.

In some possible implementations, the system 1000 further includes:
a training module 1005, configured to: obtain text data from a vulnerability fixing dataset or a vulnerability test case dataset, search a vulnerability description knowledge base based on the text data, to obtain vulnerability description knowledge corresponding to the text data, and search a vulnerability common weakness enumeration CWE database based on the text data, to obtain CWE knowledge corresponding to the text data.

The training module 1005 is further configured to: concatenate the text data, the vulnerability description knowledge, and the CWE knowledge into prompt information; and input the prompt information into a general language model for training, to obtain the text semantic identification model.

In some possible implementations, the system 1000 further includes:
a dataset construction module 1007, configured to: establish an association relationship between a vulnerability fixing code sample and CWE information, and input the vulnerability fixing code sample into a vulnerability fixing code analysis engine, to obtain a function change code sample and a test case code sample; and obtain, based on the function change code sample, a vulnerability fixing code sample for a vulnerability and a corresponding function description by using prompt information and a language model; and obtain, based on the test case code sample, a vulnerability test case code sample for the vulnerability and a corresponding function description by using prompt information and a language model.

The dataset construction module 1007 is further configured to: store metadata of the vulnerability, the CWE information, and the vulnerability fixing code sample and the corresponding function description into the vulnerability fixing dataset, and/or store the metadata of the vulnerability, the CWE information, and the vulnerability test case code sample and the corresponding function description into the vulnerability test case dataset.

Similar to the training module 1005, the dataset construction module 1007 may be implemented by using software or hardware. When implemented by software, the dataset construction module 1007 may be an application program running on the compute device. The application program may be provided for a user in a form of a virtualization service. The virtualization service may include a VM service, a BMS service, or a container service. When implemented by hardware, the dataset construction module 1007 may include at least one compute device, such as a server. Alternatively, the training module 1005 may be a device implemented by using an ASIC or a PLD.

In some possible implementations, the system 1000 further includes:
a training module 1005, configured to: obtain a vulnerability fixing corpus pair and a vulnerability test case corpus pair, where the vulnerability fixing corpus pair includes the vulnerability fixing code sample and associated CWE information, and the vulnerability test case corpus pair includes the vulnerability test case sample and associated CWE information; and input the vulnerability fixing corpus pair and the vulnerability test case corpus pair into a pre-trained model for supervised fine-tuning SFT, to obtain the first language model.

In some possible implementations, the obtaining module 1002 is specifically configured to:
obtain vulnerability metadata from a vulnerability library; and
obtain the commit information of the open-source software based on the vulnerability metadata.

In some possible implementations, the obtaining module 1002 is specifically configured to:
monitor an open-source repository to obtain the commit information of the open-source software.

In some possible implementations, the first language model or the second language model is a large language model LLM.

This application further provides a compute device 1100. As shown in FIG. 11, the compute device 1100 includes a bus 1102, a processor 1104, a memory 1106, and a communication interface 1108. The processor 1104, the memory 1106, and the communication interface 1108 communicate with each other through the bus 1102 The compute device 1100 may be a server or a terminal device. It should be understood that quantities of processors and memories in the compute device 1100 are not limited in this application.

The bus 1102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of indication, the bus is indicated by using only one line in FIG. 11. However, it does not indicate that there is only one bus or only one type of bus. The bus 1102 may include a path for transferring information between components (for example, the memory 1106, the processor 1104, and the communication interface 1108) of the compute device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The memory 1106 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1106 stores executable program code, and the processor 1104 executes the executable program code to implement the foregoing vulnerability fixing code identification method. Specifically, the memory 1106 stores instructions used by the vulnerability fixing code identification system 1000 to perform the vulnerability fixing code identification method.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device like a desktop computer, a notebook computer, or a smartphone.

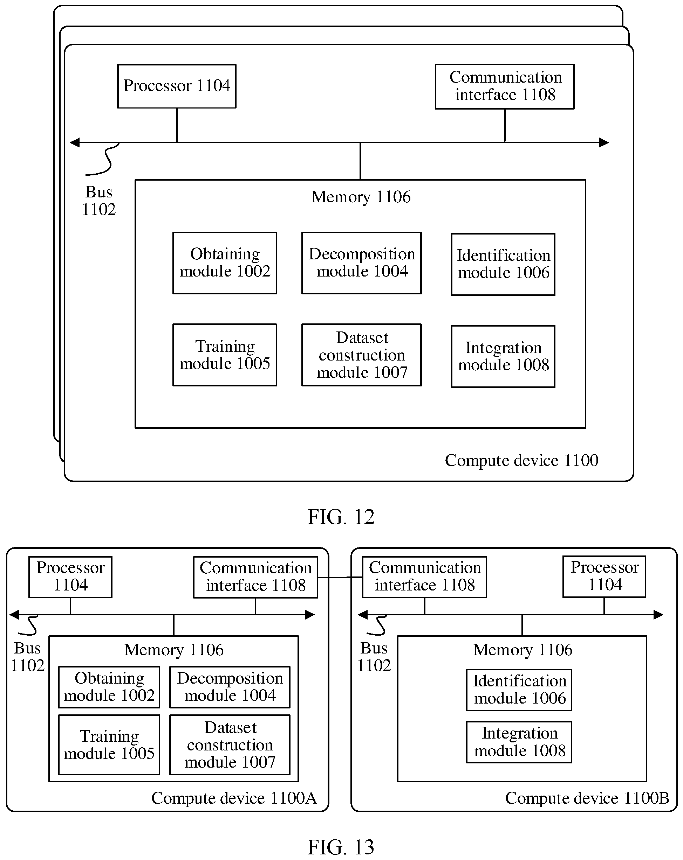

As shown in FIG. 12, a compute device cluster includes at least one compute device 1100. A memory 1106 in the one or more compute devices 1100 in the compute device cluster may store instructions that are the same as those used by a vulnerability fixing code identification system 1000 to perform a vulnerability fixing code identification method.

In some possible implementations, the one or more compute devices 1100 in the compute device cluster may alternatively be configured to execute some instructions of the vulnerability fixing code identification system 1000 to execute the vulnerability fixing code identification method. In other words, a combination of one or more compute devices 1100 may jointly execute the instructions used by the vulnerability fixing code identification system 1000 to execute the vulnerability fixing code identification method.

It should be noted that memories 1106 in different compute devices 1100 in the compute device cluster may store different instructions, to perform some functions of the vulnerability fixing code identification system 1000.

FIG. 13 shows a possible implementation. As shown in FIG. 13, two compute devices 1100A and 1100B are connected through a communication interface 1108. A memory in the compute device 1100A stores instructions for executing functions of an obtaining module 1002 and a decomposition module 1004. A memory in the compute device 1100B stores instructions for executing functions of an identification module 1006 and an integration module 1008. In other words, the memories 1106 of the compute devices 1100A and 1100B jointly store instructions used by a vulnerability fixing code identification system 1000 to perform a vulnerability fixing code identification method. Further, the compute device 1100A may further store instructions for executing functions of a training module 1005 and a dataset construction module 1007.

A connection manner between compute device clusters shown in FIG. 13 may be that, considering that the vulnerability fixing code identification method provided in this application requires a large amount of computational power to identify function change information and test case information obtained after decomposition, it is considered that functions implemented by the identification module 1006 and the integration module 1008 are performed by the compute device 1100B.

It should be understood that functions of the compute device 1100A shown in FIG. 13 may alternatively be completed by a plurality of compute devices 1100. Similarly, functions of the compute device 1100B may alternatively be completed by a plurality of compute devices 1100.

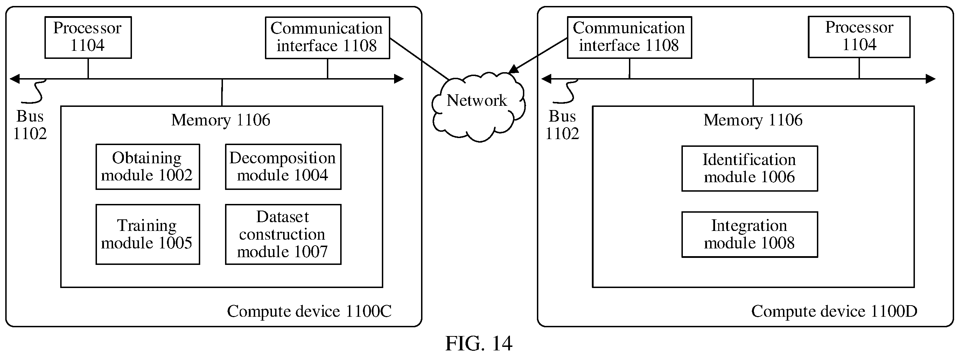

In some possible implementations, one or more compute devices in the compute device cluster may be connected over a network. The network may be a wide area network, a local area network, or the like. FIG. 14 shows a possible implementation. As shown in FIG. 14, two compute devices 1100C and 1100D are connected over a network. Specifically, each compute device is connected to the network through a communication interface in the compute device. In this type of possible implementation, a memory 1106 in the compute device 1100C stores instructions for performing functions of an obtaining module 1002 and a decomposition module 1004. In addition, a memory 1106 in the compute device 1100D stores instructions for executing functions of an identification module 1006 and an integration module 1008.

A connection manner between compute device clusters shown in FIG. 14 may be that, considering that the vulnerability fixing code identification method provided in this application requires a large amount of computational power to identify function change information and test case information obtained after decomposition, it is considered that functions implemented by the identification module 1006 and the integration module 1008 are performed by the compute device 1100D.

It should be understood that functions of the compute device 1100C shown in FIG. 14 may alternatively be completed by a plurality of compute devices 1100. Similarly, functions of the compute device 1100D may alternatively be completed by a plurality of compute devices 1100.

An embodiment of this application further provides a computer-readable storage medium. The computer-readable storage medium may be any usable medium that can be stored by a compute device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the foregoing vulnerability fixing code identification method applied to the vulnerability fixing code identification system 1000.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the foregoing vulnerability fixing code identification method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A vulnerability fixing code identification method, wherein the method comprises:
obtaining, by a vulnerability fixing code identification system, commit information of open-source software, wherein the commit information comprises a code snippet in a commit and text information associated with the code snippet;
inputting, by the vulnerability fixing code identification system, the commit information into a first language model for identification, to obtain function change information and test case information, wherein the function change information comprises a function change code snippet and a function change text, and the test case information comprises a test case code snippet and a test case text;
inputting, by the vulnerability fixing code identification system, the function change information into a vulnerability fixing identification model, to obtain a vulnerability fixing code snippet for a target vulnerability, and inputting the test case information into a vulnerability test case identification model, to obtain a test case code snippet for the target vulnerability; and
inputting, by the vulnerability fixing code identification system, the vulnerability fixing code snippet for the target vulnerability and the test case code snippet for the target vulnerability into a second language model for integration and identification, to obtain an identification result.

2. The method according to claim 1, wherein the vulnerability fixing identification model comprises a vulnerability fixing code semantic identification model and a vulnerability fixing text semantic identification model, and the vulnerability test case identification model comprises a vulnerability test case code semantic identification model and a vulnerability test case text semantic identification model; and
the method comprises:
inputting, by the vulnerability fixing code identification system, the function change code snippet into the vulnerability fixing code semantic identification model, and inputting the function change text into the vulnerability fixing text semantic identification model, to obtain the vulnerability fixing code snippet for the target vulnerability based on a semantic identification result of the function change code snippet and a semantic identification result of the function change text; and
inputting, by the vulnerability fixing code identification system, the test case code snippet into the vulnerability test case code semantic identification model, and inputting the test case text into the vulnerability test case text semantic identification model, to obtain the test case code snippet for the target vulnerability based on a semantic identification result of the test case code snippet and a semantic identification result of the test case text.

3. The method according to claim 2, wherein the method further comprises:
obtaining code data from a vulnerability fixing dataset or a vulnerability test case dataset;
preprocessing the code data to obtain a full code difference and a function-level code difference with a vulnerability label;
inputting the full code difference into a pre-trained language model for fine-tuning, to obtain a fine-tuned model;
inputting the function-level code difference with the vulnerability label into the fine-tuned model, to obtain a representation of the function-level code difference; and
obtaining a commit representation based on the representation of the function-level code difference, and inputting the commit representation into a classifier for training, to obtain the code semantic identification model.

4. The method according to claim 2, wherein the method further comprises:
obtaining text data from a vulnerability fixing dataset or a vulnerability test case dataset;
searching a vulnerability description knowledge base based on the text data, to obtain vulnerability description knowledge corresponding to the text data, and searching a vulnerability common weakness enumeration CWE database based on the text data, to obtain CWE knowledge corresponding to the text data;
concatenating the text data, the vulnerability description knowledge, and the CWE knowledge into prompt information; and
inputting the prompt information into a general-purpose language model for training, to obtain the text semantic identification model.

5. The method according to claim 3 or 4, wherein the dataset is constructed in the following manner:
establishing an association relationship between a vulnerability fixing code sample and CWE information;
inputting the vulnerability fixing code sample into a vulnerability fixing code analysis engine, to obtain the function change code sample and a test case code sample;
obtaining, based on the function change code sample, a vulnerability fixing code sample for a vulnerability and a corresponding function description by using prompt information and a language model, and obtaining, based on the test case code sample, a vulnerability test case code sample for the vulnerability and a corresponding function description by using prompt information and a language model; and
storing metadata of the vulnerability, the CWE information, and the vulnerability fixing code sample and the corresponding function description into the vulnerability fixing dataset, and/or storing the metadata of the vulnerability, the CWE information, and the vulnerability test case code sample and the corresponding function description into the vulnerability test case dataset.

6. The method according to any one of claims 1 to 5, wherein the first language model is obtained through training in the following manner:
obtaining a vulnerability fixing corpus pair and a vulnerability test case corpus pair, wherein the vulnerability fixing corpus pair comprises the vulnerability fixing code sample and associated CWE information, and the vulnerability test case corpus pair comprises the vulnerability test case sample and associated CWE information; and
inputting the vulnerability fixing corpus pair and the vulnerability test case corpus pair into a pre-trained model for supervised fine-tuning SFT, to obtain the first language model.

7. The method according to any one of claims 1 to 6, wherein the obtaining, by the vulnerability fixing code identification system, the commit information of the open-source software comprises:
obtaining, by the vulnerability fixing code identification system, vulnerability metadata from a vulnerability library; and
obtaining, by the vulnerability fixing code identification system, the commit information of the open-source software based on the vulnerability metadata.

8. The method according to any one of claims 1 to 6, wherein the obtaining, by the vulnerability fixing code identification system, the commit information of the open-source software comprises:
monitoring, by the vulnerability fixing code identification system, an open-source repository to obtain the commit information of the open-source software.

9. The method of any one of claims 1 to 8, wherein the first language model or the second language model is a large language model LLM.

10. A vulnerability fixing code identification system, wherein the system comprises:
an obtaining module, configured to obtain commit information of open-source software, wherein the commit information comprises a code snippet in a commit and text information associated with the code snippet;
a decomposition module, configured to input the commit information into a first language model for identification, to obtain function change information and test case information, wherein the function change information comprises a function change code snippet and a function change text, and the test case information comprises a test case code snippet and a test case text;
an identification module, configured to: input the function change information into a vulnerability fixing identification model, to obtain a vulnerability fixing code snippet for a target vulnerability, and input the test case information into a vulnerability test case identification model, to obtain a test case code snippet for the target vulnerability; and
an integration module, configured to input the vulnerability fixing code snippet for the target vulnerability and the test case code snippet for the target vulnerability into a second language model for integration and identification, to obtain an identification result.

11. The system according to claim 10, wherein the vulnerability fixing identification model comprises a vulnerability fixing code semantic identification model and a vulnerability fixing text semantic identification model, and the vulnerability test case identification model comprises a vulnerability test case code semantic identification model and a vulnerability test case text semantic identification model; and
the identification module is specifically configured to:
input the function change code snippet into the vulnerability fixing code semantic identification model, and input the function change text into the vulnerability fixing text semantic identification model, to obtain the vulnerability fixing code snippet for the target vulnerability based on a semantic identification result of the function change code snippet and a semantic identification result of the function change text; and
input the test case code snippet into the vulnerability test case code semantic identification model, and input the test case text into the vulnerability test case text semantic identification model, to obtain the test case code snippet for the target vulnerability based on a semantic identification result of the test case code snippet and a semantic identification result of the test case text.

12. The system according to claim 11, wherein the system further comprises:
a training module, configured to: obtain code data from a vulnerability fixing dataset or a vulnerability test case dataset, preprocess the code data to obtain a full code difference and a function-level code difference with a vulnerability label, and input the full code difference into a pre-trained language model for fine-tuning, to obtain a fine-tuned model, wherein
the training module is further configured to: input the function-level code difference with the vulnerability label into the fine-tuned model, to obtain a representation of the function-level code difference; and obtain a commit representation based on the representation of the function-level code difference, and input the commit representation into a classifier for training, to obtain the code semantic identification model.

13. The system according to claim 11, wherein the system further comprises:
a training module, configured to: obtain text data from a vulnerability fixing dataset or a vulnerability test case dataset, search a vulnerability description knowledge base based on the text data, to obtain vulnerability description knowledge corresponding to the text data, and search a vulnerability common weakness enumeration CWE database based on the text data, to obtain CWE knowledge corresponding to the text data, wherein
the training module is further configured to: concatenate the text data, the vulnerability description knowledge, and the CWE knowledge into prompt information; and input the prompt information into a general language model for training, to obtain the text semantic identification model.

14. The system according to claim 12 or 13, wherein the system further comprises:
a dataset construction module, configured to: establish an association relationship between a vulnerability fixing code sample and CWE information, and input the vulnerability fixing code sample into a vulnerability fixing code analysis engine, to obtain the function change code sample and a test case code sample; and obtain, based on the function change code sample, a vulnerability fixing code sample for a vulnerability and a corresponding function description by using prompt information and a language model; and obtain, based on the test case code sample, a vulnerability test case code sample for the vulnerability and a corresponding function description by using prompt information and a language model, wherein
the dataset construction module is further configured to: store metadata of the vulnerability, the CWE information, and the vulnerability fixing code sample and the corresponding function description into the vulnerability fixing dataset, and/or store the metadata of the vulnerability, the CWE information, and the vulnerability test case code sample and the corresponding function description into the vulnerability test case dataset.

15. The system according to any one of claims 10 to 14, wherein the system further comprises:
a training module, configured to: obtain a vulnerability fixing corpus pair and a vulnerability test case corpus pair, wherein the vulnerability fixing corpus pair comprises the vulnerability fixing code sample and associated CWE information, and the vulnerability test case corpus pair comprises the vulnerability test case sample and associated CWE information; and input the vulnerability fixing corpus pair and the vulnerability test case corpus pair into a pre-trained model for supervised fine-tuning SFT, to obtain the first language model.

16. The system according to any one of claims 10 to 15, wherein the obtaining module is specifically configured to:
obtain vulnerability metadata from a vulnerability library; and
obtain the commit information of the open-source software based on the vulnerability metadata.

17. The system according to any one of claims 10 to 15, wherein the obtaining module is specifically configured to:
monitor an open-source repository to obtain the commit information of the open-source software.

18. The system according to any one of claims 10 to 17, wherein the first language model or the second language model is a large language model LLM.

19. A compute device cluster, wherein the compute device cluster comprises at least one compute device, the at least one compute device comprises at least one processor and at least one memory, the at least one memory stores computer-readable instructions, and the at least one processor executes the computer-readable instructions, to cause the compute device cluster to perform the vulnerability fixing code identification method according to any one of claims 1 to 9.

20. A computer-readable storage medium, comprising computer-readable instructions, wherein the computer-readable instructions are used for implementing the vulnerability fixing code identification method according to any one of claims 1 to 9.

21. A computer program product, comprising computer-readable instructions, wherein the computer-readable instructions are used for implementing the vulnerability fixing code identification method according to any one of claims 1 to 9.
